# EUROPÄISCHE PATENTSCHRIFT

(11) **EP 4 102 486 B1**
(45) Veröffentlichungstag und Bekanntmachung des Hinweises auf die Patenterteilung: **16.04.2025**
(21) Anmeldenummer: 22176484.8
(22) Anmeldetag: 31.05.2022
(51) Int. Cl.: G08G 5/80, G08G 5/00, G06T 7/00

(54) **VERFAHREN ZUM STEUERN EINER FLUGBEWEGUNG EINES FLUGGERÄTS SOWIE FLUGGERÄT**
AIRCRAFT AND METHOD FOR CONTROLLING THE FLIGHT MOVEMENT OF AN AIRCRAFT
PROCÉDÉ DE COMMANDE D'UN MOUVEMENT DE VOL D'UN AÉRONEF, AINSI QU'AÉRONEF

(30) Priorität: 11.06.2021 DE 102021115139
(43) Veröffentlichungstag der Anmeldung: 14.12.2022
(73) Patentinhaber: Spleenlab GmbH, 07929 Saalburg-Ebersdorf (DE)
(72) Erfinder: Hagen, Chris, 07356 Bad Lobenstein (DE); Ölsner, Florian, 07743 Jena (DE); Milz, Dr. Stefan, 07929 Saalburg-Ebersdorf (DE)
(74) Vertreter: Bittner, Thomas L.

(56) Entgegenhaltungen:
- WO-A1-2020/135604
- WO-A1-95/16247
- US-A1- 2005 109 872
- US-A1- 2019 068 829
- US-A1- 2019 087 635
- US-A1- 2021 329 155

## Beschreibung

Die Erfindung betrifft ein Verfahren zum Steuern einer Flugbewegung eines Fluggeräts sowie ein Fluggerät.

### Hintergrund

Fluggeräte sind als bemannte sowie unbemannte Fluggeräte bekannt. Die Flugbewegung der Fluggeräte wird mit Hilfe einer Steuereinrichtung gesteuert, welche Steuersignale bereitstellt, um zum Beispiel Antriebseinrichtungen und Ruder zu steuern. Hierbei ist es bekannt, beim Bestimmen der Steuersignale für die Flugbewegung des Fluggeräts Sensorsignale einer Sensoreinrichtung zu berücksichtigen, die Umgebungsparameter für die Umgebung des Fluggeräts anzeigen, und die Flugbewegung in Abhängigkeit solcher Sensorsignale auszuführen.

US 2019/087635 A1 offenbart: Luftfahrzeuge, die mit einem oder mehreren Bildgebungsgeräten ausgestattet sind, können mithilfe von Bildpaaren kleine Hindernisse oder Hindernisse erkennen, deren Farben oder Texturen mit den Farben oder Texturen eines Landebereichs übereinstimmen von den bildgebenden Geräten erfasst. Unterschiede zwischen Pixeln, die Punkten des Landebereichs entsprechen, die in jedem Bildpaar erscheinen, können bestimmt und verwendet werden, um eine Rekonstruktion des Landebereichs und ein Differenzbild zu erzeugen. Wenn entweder die Rekonstruktion oder das Differenzbild das Vorhandensein eines oder mehrerer Hindernisse erkennen lässt, kann ein Landevorgang am Landeplatz abgebrochen werden oder entsprechend ein alternativer Landeplatz für das Luftfahrzeug identifiziert werden.

US 2005/109872 A1 offenbart eine Vorrichtung und ein Verfahren zur Erkennung eines Flughindernisses in der Umgebung eines Flugzeugs, insbesondere zur Kollisionswarnung, wobei Bilder der Umgebung aufgenommen werden, das Flughindernis erkannt wird aus den Bildern erstellt und mit einer Identifikation versehen und ein mit der Identifikation verbundenes Signal in einer Bodenstation ausgegeben. Um eine hohe Sicherheit hinsichtlich der Steuerung des Luftfahrzeugs zu gewährleisten die automatisch oder durch eine erfolgt Für den Bodenkontrollpiloten wird vorgeschlagen, dass die Erkennung und Zuordnung der Identifikation an Bord des Flugzeugs erfolgt und die Identifikation an die Bodenstation gesendet wird.

WO 2020/135604 A1 offenbart ein Bildverarbeitungsverfahren und -gerät sowie ein unbemanntes Luftfahrzeug. Das Bildverarbeitungsverfahren umfasst: Umwandeln eines von einem Bilderfassungsgerät erhaltenen Rohbildsignals in ein digitales Bildsignal; Teilen des digitalen Bildsignals in zwei Teile; Durchführen einer Bildverarbeitung an einem Teil des digitalen Bildsignals, Erhalten erster Bilddaten und Komprimieren der ersten Bilddaten, um eine Videodatei zu erhalten; und Durchführen einer Bildverarbeitung am anderen Teil des digitalen Bildsignals, Erhalten zweiter Bilddaten und Komprimieren der zweiten Bilddaten, um eine Bilddatei zu erhalten; Die Ausführungsformen der Offenbarung teilen ein digitales Bildsignal in zwei Teile, führen entsprechende Bildverarbeitungsvorgänge durch und erhalten eine Videodatei und eine Bilddatei. Durch die Bildverarbeitung der beiden jeweiligen Teile des digitalen Bildsignals wird sichergestellt, dass die Qualitäts- und Quantitätsanforderungen für die Videodatei und die Bilddatei erfüllt werden und die Bildqualität der Videodatei und der Bilddatei gleichzeitig beibehalten werden kann.

WO 95/16247 A1 offenbart ein automatisches Überwachungssystem zum Erkennen von Fremdkörpern oder Defekten, die ein Substrat beeinträchtigen, wobei das System Abbildungsmittel zum Erhalten eines Bildes des Substrats und Bildverarbeitungsmittel umfasst, die mehrere parallele Bildverarbeitungspfade umfassen, die unterschiedliche Analysetechniken anwenden das Bild, und Entscheidung bedeutet den Empfang von Eingaben von den Verarbeitungspfaden, die entscheiden, ob das abgebildete Substrat von einem Fremdkörper oder Defekt betroffen ist oder nicht. In einer bevorzugten Ausführungsform der Offenbarung verwendet das Überwachungssystem trainierbare Methoden, die die Verwendung künstlicher neuronaler Netze, entweder überwacht oder unüberwacht, und verwandter statistischer Mustererkennungsmethoden umfassen.

US 2019/068829 A1 offenbart Verfahren, die von einem Prozessor eines Roboterfahrzeugs zum Erkennen und Reagieren auf Hindernisse an ein bordeigenes Bildgerät, das einen Bildsensor umfasst, ausgeführt werden. Verschiedene Ausführungsformen können das Veranlassen, dass das Bildgebungsgerät mindestens ein Bild aufnimmt, das Bestimmen, ob ein Hindernis für das Bildgebungsgerät zumindest teilweise auf der Grundlage des mindestens einen aufgenommenen Bildes erkannt wird, und als Reaktion auf das Feststellen, dass es sich um ein Hindernis für die Bildgebung handelt, beinhalten Gerät erkannt wird, einen Bereich des Bildsensors identifiziert, der dem Hindernis entspricht, und Bilddaten maskiert, die von dem identifizierten Bereich des Bildsensors empfangen werden.

### Zusammenfassung

Aufgabe der Erfindung ist es, ein Verfahren zum Steuern einer Flugbewegung eines Fluggeräts sowie ein Fluggerät anzugeben, die eine effiziente und sichere Steuerung der Flugbewegung ermöglichen.

Zur Lösung sind ein Verfahren zum Steuern einer Flugbewegung eines Fluggeräts sowie ein Fluggerät nach den unabhängigen Ansprüchen 1 und 10 geschaffen. Ausgestaltungen sind Gegenstand von abhängigen Unteransprüchen.

Nach einem Aspekt ist ein Verfahren zum Steuern einer Flugbewegung eines Fluggeräts geschaffen, welches Folgendes aufweist: Erfassen von ersten Bilddaten mittels einer ersten Kameraeinrichtung, die an dem Fluggerät angeordnet und eingerichtet ist, eine Umgebung des Fluggeräts beim Fliegen zu beobachten, wobei die ersten Bilddaten eine erste Folge von ersten Kamera-bildern anzeigen; Erfassen von zweiten Bilddaten mittels einer zweiten Kameraeinrichtung, die an dem Fluggerät angeordnet und eingerichtet ist, die Umgebung des Fluggeräts beim Fliegen zu beobachten wobei die zweiten Bilddaten eine zweite Folge von zweiten Kamerabildern anzeigen; und Verarbeiten der ersten und der zweiten Bilddaten mittels einer Auswerteeinrichtung, wobei hierbei Folgendes vorgesehen ist: Vorverarbeiten der ersten und der zweiten Bilddaten, wobei hierbei aus den ersten und den zweiten Bilddaten Messbilddaten bestimmt werden, die wenigstens ein Kameramessbild anzeigen; Ausführen einer redundanten Bildanalyse für das wenigstens eine Kameramessbild, wobei das wenigstens eine Kameramessbild hierbei in getrennten Bildanalysen mittels einer ersten auf künstlicher Intelligenz basierenden Bildanalyse und einer zweiten Bildanalyse, die frei von künstlicher Intelligenz ausgeführt wird, analysiert wird; Bestimmen von Objektparametern für eine Lage eines Flughindernisses in der Umgebung des Fluggeräts, wenn die erste Bildanalyse das Flughindernis in dem wenigstens einen Kameramessbild bestimmt und die zweite Bildanalyse das Flughindernis in dem wenigstens einen Kameramessbild ebenso bestimmt; und Übertragen von Flughindernisdaten, welche zumindest die Objektparameter anzeigen, an eine Steuereinrichtung des Fluggeräts. Eine Flugbewegung des Fluggeräts wird durch die Steuereinrichtung unter Berücksichtigung der Objektparameter zum Vermeiden einer Kollision mit dem Flughindernis gesteuert.

Nach einem weiteren Aspekt ist ein Fluggerät geschaffen, welches Folgendes aufweist: eine Sensoreinrichtung, die eine erste und eine zweite Kameraeinrichtung aufweist; eine Auswerteeinrichtung, die ein oder mehrere Prozessoren aufweist; und eine Steuereinrichtung, die eingerichtet ist, eine Flugbewegung des Fluggeräts zu steuern. Das Fluggerät ist für Folgendes eingerichtet: Erfassen von ersten Bilddaten mittels einer ersten Kameraeinrichtung, die an einem Fluggerät angeordnet und eingerichtet ist, eine Umgebung des Fluggeräts beim Fliegen zu beobachten, wobei die ersten Bilddaten eine erste Folge von ersten Kamera-bildern anzeigen; Erfassen von zweiten Bilddaten mittels einer zweiten Kameraeinrichtung, die an einem Fluggerät angeordnet und eingerichtet ist, die Umgebung des Fluggeräts beim Fliegen zu beobachten wobei die zweiten Bilddaten eine zweite Folge von zweiten Kamerabildern anzeigen; und Verarbeiten der ersten und der zweiten Bilddaten mittels einer Auswerteeinrichtung, wobei hierbei Folgendes vorgesehen ist: Vorverarbeiten der ersten und der zweiten Bilddaten, wobei hierbei aus den ersten und den zweiten Bilddaten Messbilddaten bestimmt werden, die wenigstens ein Kameramessbild anzeigen; Ausführen einer redundanten Bildanalyse für das wenigstens eine Kameramessbild, wobei das wenigstens eine Kameramessbild hierbei in getrennten Bildanalysen mittels einer ersten auf künstlicher Intelligenz basierenden Bildanalyse und einer zweiten Bildanalyse, die frei von künstlicher Intelligenz ausgeführt wird, analysiert wird; Bestimmen von Objektparametern für eine Lage eines Flughindernisses in der Umgebung des Fluggeräts, wenn die erste Bildanalyse das Flughindernis in dem wenigstens einen Kameramessbild bestimmt und die zweite Bildanalyse das Flughindernis in dem wenigstens einen Kameramessbild ebenso bestimmt; und Übertragen von Flughindernisdaten, welche zumindest die Objektparameter anzeigen, an die Steuereinrichtung des Fluggeräts. Das Fluggerät ist eingerichtet, eine Flugbewegung des Fluggeräts durch die Steuereinrichtung unter Berücksichtigung der Objektparameter zum Vermeiden einer Kollision mit dem Flughindernis zu steuern.

Die vorgeschlagene Technologie sieht bei dem Fluggerät mehrere Kameraeinrichtungen vor, die während der Flugbewegung jeweilige Bilddaten für die Umgebung des Fluggeräts erfassen, wobei die Bilddaten jeweils eine Folge von Kamerabildern anzeigen. Zur Auswertung der Bilddaten mittels der Auswerteeinrichtung ist eine redundante Bildanalyse vorgesehen, die mit einer auf künstlicher Intelligenz basierenden Bildanalyse sowie einer nicht auf künstlicher Intelligenz basierend (frei hiervon) Bildanalyse arbeitet, sodass in voneinander unabhängigen Bildanalysen geprüft wird, ob die erfassten Bilddaten ein Flughindernis für die Flugbewegung des Fluggeräts anzeigen. Für die Lage eines solchen Flughindernisses werden Objektparameter bestimmt, wenn die nicht auf künstlicher Intelligenz basierende Bildanalyse ein Ergebnis der auf künstlicher Intelligenz basierenden Bildanalyse bestätigt, dahingehend, dass die analysierten Bilddaten mindestens ein Flughindernis anzeigen. Nur dann erfolgt die Bestimmung der Objektparameter, die im Rahmen des Übertragens von Flughindernisdaten an die Steuereinrichtung des Fluggeräts übermittelt werden, sodass hierauf die Steuereinrichtung die Flugbewegung des Fluggeräts so steuern kann, dass eine Kollision mit dem bestimmten oder detektierten Flughindernis vermieden wird. Die redundante Bildanalyse für die zuvor erfassten Bilddaten mit den beiden unabhängig voneinander durchgeführten Bildanalysen erhöht die Sicherheit für eine korrekte Bestimmung von Flughindernissen und die hierauf folgende Kollisionsvermeidung. Sowohl eine Bildanalyse basierend auf künstlicher Intelligenz wie auch eine klassische (nicht auf künstlicher Intelligenz basierende) Bildanalyse werden unabhängig voneinander für die Auswertung der mit mehreren Kameraeinrichtungen erfassten Bilddaten eingesetzt.

Beim Bestimmen der Objektparameter für das Flughindernis kann zumindest ein Objektparameter aus der folgenden Gruppe bestimmt werden: Entfernung des Flughindernisses vom Fluggerät, Richtung des Flughindernisses in Bezug auf das Fluggerät, Größe des Flughindernisses, bewegtes Flughindernis, unbewegtes Flughindernis, Orientierung einer Flugbewegung des Flughindernisses, aktuelle Geschwindigkeit der Flugbewegung des Flughindernisses und ein vorhergesagter Flugpfad des Flughindernisses für einen Vorhersagezeitraum.

Das Bestimmen der Objektparameter kann weiterhin Folgendes umfassen: Bereitstellen von Flugbewegungsdaten, die die Flugbewegung des Fluggeräts anzeigen, durch die Steuereinrichtung; und Bestimmen der Objektparameter für die Lage des Flughindernisses in der Umgebung des Fluggeräts unter Berücksichtigung der Flugbewegungsdaten. Die Flugbewegungsdaten können insbesondere eine aktuelle Flugbewegung des Fluggeräts charakterisieren, beispielsweise hinsichtlich Geschwindigkeit und / oder Raumrichtung. Die Berücksichtigung der Flugbewegungsdaten optimiert die Bestimmung der Objektparameter für das Flughindernis zur Kollisionsvermeidung, indem diese in Abhängigkeit beziehungsweise unter Berücksichtigung der Flugbewegungsdaten bestimmt werden.

Bei der zweiten Bildanalyse kann mittels eines optischen Flusses eine Bewegung für das Flughindernis bestimmt werden. Ein optischer Fluss zeigt beispielsweise eine Bewegungsbahn für ein oder mehrere Bildpixel in dem wenigstens einen Kameramessbild an und kann so eine Bewegung für eventuell einem Flughindernis zugeordnete Bildpixel anzeigen, was ein Hinweis auf das Flughindernis ist, welches sich bewegt. Allgemein wird unter einem optischen Fluss einer Bildsequenz ein Vektorfeld einer in die Bildebene projizierten Geschwindigkeit eines oder mehrerer Bildpixel in den betrachteten Raum (Umgebung) verstanden. Der optische Fluss ist somit eine Repräsentation von Bewegungsinformationen im Rahmen der Bildanalyse.

Bei der ersten Bildanalyse können mittels eines auf künstlicher Intelligenz basierenden Analysealgorithmus ein oder mehrere der folgenden Kennwerte für das Flughindernis bestimmt werden: Höhe des Flughindernisses, Breite des Flughindernisses und Konfidenzwert für die Bestimmung des Flughindernisses in dem wenigstens einen Kameramessbild. Im Rahmen der auf künstlicher Intelligenz basierenden Bildanalyse kann vorgesehen sein, dass mittels des verwendeten Analysealgorithmus ein Rahmen oder eine Box um das Flughindernis in dem wenigstens einen Kameramessbild bestimmt wird, wodurch ein Bildbereich des wenigstens einen Kameramessbildes bestimmt wird, indem das Flughindernis mit gewisser Wahrscheinlichkeit vorhanden ist. Der Rahmen kann so bestimmt werden, dass er Außengrenzen des Flughindernisses in dem wenigsten einen Kameramessbild anzeigt, woraus Höhe und / oder Breite des Flughindernisses bestimmt werden können.

Bei der Bildanalyse mittels des auf künstlicher Intelligenz basierenden Analysealgorithmus kann ein neuronales Netz verwendet werden, zum Beispiel in Kombination mit einer Bestimmung eines optischen Flusses mittels des nicht auf künstlicher Intelligenz basierenden Analysealgorithmus. Das zuvor trainierte neuronale Netz prozessiert bei der auf künstlicher Intelligenz basierenden Bildanalyse direkt die Bilddaten. Es können verschiedenen Schichten des neuronalen Netzes durchlaufen werden, bis letztlich direkt Kennwerte in Bildkoordinaten (Pixelkoordinaten, Rahmengröße, Objektklasse sowie Konfidenzwert) geschätzt werden. Die Objektparameter wie zum Beispiel Entfernung des Flughindernisses vom Fluggerät, Richtung des Flughindernisses in Bezug auf das Fluggerät sowie Größe des Fluggerätes können mittels der Kameraparameter (Kalibrierung) aus den Kennwerten des neuronalen Netzes sowie der bestimmten Objektklasse ermittelt werden.

Als nicht auf künstlicher Intelligenz basierendes Verfahren können beispielweise Kantenfilter wie zum Beispiel Sobelfilter bis hin zu Verfahren des optischen Flusses verwendet werden, welche auf einfachen geometrischen Verfahren beruhen.

Beim Bestimmen der Objektparameter kann aus zeitlich aufeinanderfolgenden Positionen des Flughindernisses ein dreidimensionaler Bewegungspfad für das Flughindernis in der Umgebung bestimmt werden, zum Beispiel den Flug eines anderen Fluggeräts.

Weiterhin kann Folgendes vorgesehen sein: Ausführen einer Sichtanalyse für die erste / zweite Kameraeinrichtung beim Vorverarbeiten der ersten und der zweiten Bilddaten, wobei hierbei bestimmt wird, ob ein jeweiliges Erfassungssichtfeld (Kamerasichtfeld) der ersten / zweiten Kameraeinrichtung frei von einer Sichtfeld-Blockierung ist. Auf diese Weise wird sichergestellt, dass das Erfassungs- oder Detektionssichtfeld für die Kameraeinrichtungen jeweils nicht blockiert ist, sodass die Bilddaten mit ausreichender Sicherheit erfasst werden, um dann eine den Sicherheitsanforderungen genügende Bildanalyse durchzuführen.

Bei der Sichtanalyse kann bestimmt werden, in welchem Umfang das Erfassungssichtfeld der ersten Kameraeinrichtung und / oder der zweiten Kameraeinrichtung blockiert ist, und in der Auswerteeinrichtung können Sichtfeldkenndaten bereitgestellt und an die Steuereinrichtung übertragen werden, die den Umfang der Blockierung des Erfassungssichtfelds anzeigen. Auf diese Weise empfängt die Steuereinrichtung Informationen darüber, ob und gegebenenfalls in welchem Umfang das Erfassungssichtfeld einer oder mehrerer Kameraeinrichtungen blockiert ist, beispielsweise aufgrund einer Verschmutzung. Hierauf können Sicherheitsmaßnahmen vorgenommen werden. Beispielsweise kann vorgesehen sein, die Bilddaten von einer Kameraeinrichtung, deren Erfassungssichtfeld teilweise blockiert ist, von der Bilddatenanalyse auszuschließen.

Die Steuereinrichtung kann die Sichtfeldkenndaten prüfen und die Flugbewegung des Fluggeräts Notlandesteuersignale entsprechend steuern, wenn die Sichtfeldkenndaten einen Umfang der Blockierung des Erfassungssichtfelds für die erste Kameraeinrichtung und / oder die zweite Kameraeinrichtung anzeigen, welcher einen Schwellwert überschreitet, wobei die Notlandesteuersignale eingerichtet sind, eine Notlandung des Fluggeräts zu bewirken. Die Schwellwertüberschreitung zeigt in diesem Fall eine Situation an, bei der eine sichere Steuerung der Flugbewegung basierend auf den erfassten Bilddaten potentiell nicht mehr gegeben ist, weshalb die Notlandung eingeleitet wird.

Die vorangehend in Verbindung mit dem Verfahren zum Steuern der Flugbewegung des Fluggeräts erläuterten Ausgestaltungen können im Zusammenhang mit dem Fluggerät entsprechend vorgesehen sein. Bei dem Fluggerät kann es sich um ein bemanntes oder unbemanntes Fluggerät handeln.

Die Kameraeinrichtung sowie die Auswerteeinrichtung können in einem Sensormodul oder -gerät gemeinsam aufgenommen sein, welches an den Fluggerät als lösbare Gesamteinheit montiert ist.

### Beschreibung von Ausführungsbeispielen

Nachfolgend werden weitere Ausführungsbeispiele unter Bezugnahme auf Figuren einer Zeichnung näher erläutert. Hierbei zeigen:
- Fig. 1: eine schematische Darstellung einer Anordnung mit einer Sensoreinrichtung und einer Auswerteeinrichtung und
- Fig. 2: eine schematische Darstellung für ein Verfahren zum Steuern einer Flugbewegung eines Fluggeräts.

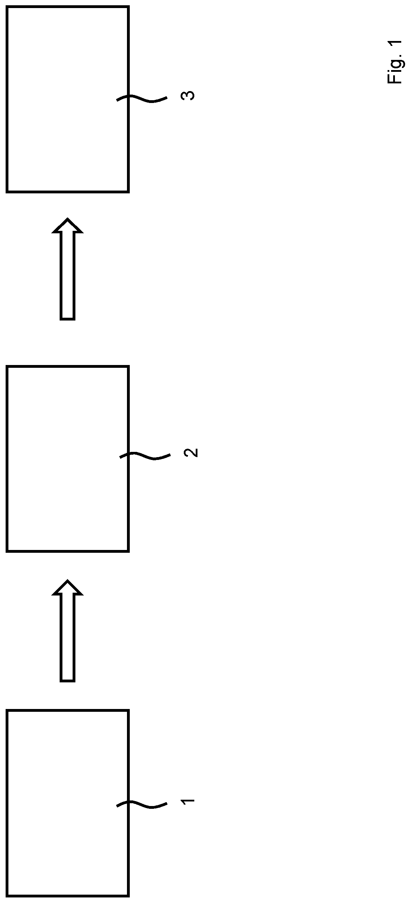

Fig. 1 zeigt eine schematische Darstellung einer Anordnung von funktionellen Komponenten zum Einsatz beim Steuern einer Flugbewegung eines Fluggeräts mit einer Sensoreinrichtung 1 und einer Auswerteeinrichtung 2, die eingerichtet ist, mittels der Sensoreinrichtung 1 erfasste Bilddaten auszuwerten, um Objektparameter für ein stationäres (nicht bewegtes) oder ein sich bewegendes, zum Beispiel fliegendes Flughindernis zu bestimmen, sodass hiervon ausgehend eine Steuereinrichtung 3 des Fluggeräts die Flugbewegung des Fluggeräts so steuern kann, dass eine Kollision mit dem Flughindernis vermieden ist, zum Beispiel mit anderen Fluggeräten im Luftraum, aber auch stationären Flughindernissen, die am Boden angeordnet sind, wie zum Beispiel Schornsteinen oder Türmen.

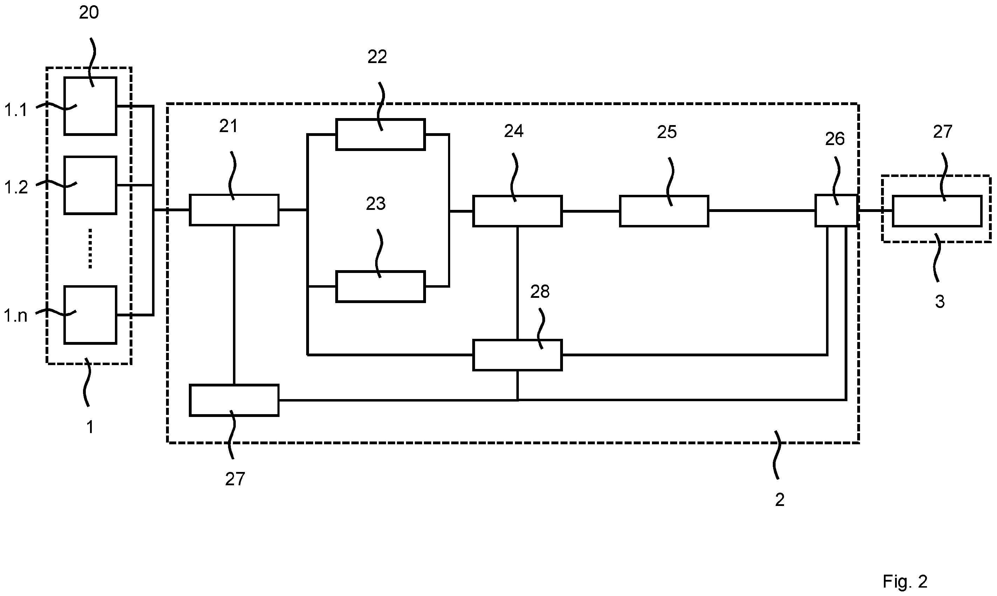

Die Sensoreinrichtung 1 umfasst gemäß Fig. 2 mehrere Kameraeinrichtungen 1.1, ..., 1.n, die jeweils eingerichtet sind, eine Umgebung des Fluggeräts während dessen Flugbewegung zu beobachten und hierbei jeweilige Bilddaten zu erfassen, die eine Folge von Kamerabildern anzeigen. Die Kameraeinrichtungen 1.1, ..., 1.n können beispielsweise eine oder mehrere der folgenden Kameraarten umfassen: Wärmebildkamera, Lichtbildkamera, Infrarotkamera, Multispektralkamera und eventbasierte Kamera (Eventkamera).

Die Eventkamera nutzt neuromorphische visuelle Sensoren. Anstatt eine Bildsequenz mit einer konstanten Frequenz zu liefern (Lichtbildkamera), senden Eventkameras (nur) Informationen von den Pixeln (Bilddaten), bei denen sich die Helligkeit signifikant verändert hat. Solche pixelweise Veränderungen werden auch als Events bezeichnet, welche mit einem Zeitstempel mit der Genauigkeit von Mikrosekunden versehen und unmittelbar danach asynchron übermittelt werden. Da nur nicht-redundante Informationen übertragen werden, sind Eventkameras energieeffizient und in der Lage, sehr schnelle Bewegungen zu erfassen. Damit nehmen sie den Zielkonflikt zwischen Energiebedarf und Latenz direkt in Angriff. Zudem können Eventkameras zum Einsatz kommen, die über einen Dynamikbereich von zum Beispiel über etwa 140 dB (im Vergleich zu Standardkameras mit typischerweise um die 60 dB) verfügen, weil jedes Pixel selbständig ist.

Die in einem Schritt 20 erfassten Bilddaten werden von der Sensoreinrichtung 1 an die Auswerteeinrichtung 2 übermittelt, wo die Kamerabilder verarbeitet werden. Zunächst ist eine Vorverarbeitung der Bilddaten vorgesehen (Schritt 21). Hierbei werden aus den Bilddaten Messbilddaten bestimmt, die wenigstens ein Kameramessbild anzeigen. Dieses bedeutet, dass eine Fusion der verschiedenen Bilddaten (Kamerabilder) ausgeführt wird. Rohdaten werden zusammengefasst zu dem wenigstens einen Kameramessbild. Es kann vorgesehen sein, dass aus den Bilddaten mehrere Kameramessbilder erzeugt werden.

In Schritten 22 und 23 wird Auswerteeinrichtung 2 mittels weiterer Datenverarbeitung eine redundante Bildanalyse für die Messbilddaten ausgeführt, die das wenigstens eine Kamerabild anzeigen. In einer ersten Bildanalyse (Schritt 22) wird das wenigstens eine Kameramessbild mittels eines auf künstlicher Intelligenz basierenden Analysealgorithmus analysiert.

Die Bildanalyse wird in einem Ausführungsbeispiel mittels eines neuronalen Netzes durchgeführt, zum Beispiel einem CNN (*"Convolutional Neural Network*") oder einem Visual Transformer. Hierzu werden direkt die Pixeldaten als RGB-Werte vom neuronalen Netz verarbeitet und mittels unterschiedlicher Schichten verändert. Die Ausgabe des neuronalen Netzes sind direkt die Kennwerte in Bildkoordinaten. Das neuronale Netz wurde vorher mittels Trainingsdaten trainiert.

Unabhängig von der auf künstlicher Intelligenz basierenden Bildanalyse wird das wenigstens eine Kameramessbild in einer zweiten Bildanalyse analysiert (Schritt 23), wobei die zweite Bildanalyse mittels eines klassischen Analysealgorithmus ausgeführt wird, welcher frei von künstlicher Intelligenz ist.

Beide unabhängig voneinander für das wenigstens eine Kameramessbild ausgeführten Bildanalysen dienen dazu, zu prüfen, ob das wenigstens eine Kameramessbild ein Flughindernis für das Fluggerät anzeigt, sodass eine Kollisionsgefahr potentiell besteht.

Im Schritt 24 werden die Ergebnisse der beiden Bildanalysen zusammengeführt. Eine folgende Bestimmung von Objektparametern für das Flughindernis (Schritt 25) findet nur statt, wenn beim Zusammenführen der Ergebnisse der Bildanalysen festgestellt wird, dass ein Flughindernis, welches die zweite (auf künstlicher Intelligenz basierende) Bildanalyse vorhersagt, auch durch die erste (nicht auf künstlicher Intelligenz basierende) Bildanalyse bestimmt wird. Nur wenn also die zweite Bildanalyse das Ergebnis der ersten Bildanalyse bestätigt, dahingehend, dass die Existenz eines Flughindernisses in dem wenigstens einen Kameramessbild bestimmt wird, werden danach Objektparameter für das Flughindernis bestimmt, die eine Lage des Flughindernisses in der Umgebung des Fluggeräts anzeigen. Die Objektparameter für das Flughindernis können ein oder mehrere der folgenden Parameter umfassen: Entfernung des Flughindernisses zum Fluggerät, Richtung des Flughindernisses in Bezug auf das Fluggerät, bewegtes / unbewegtes Flughindernis und Orientierung einer Flugbewegung des Flughindernisses. Auch kann alternativ oder ergänzend vorgesehen sein, einen dreidimensionalen Bewegungspfad für das Flughindernis in der Umgebung des Fluggeräts zu bestimmen, wenn die redundante Bildanalyse die Existenz des Flughindernisses in den erfassten Bilddaten ergibt.

Die Objektparameter für das Flughindernis werden dann im Schritt 26 zur Übertragung an die Steuereinrichtung 3 des Fluggeräts an einer Schnittstelle bereitgestellt und übertragen, worauf das Fluggerät von der Steuereinrichtung 3 kollisionsvermeidend gesteuert wird (Schritt 27).

Um die Sicherheit der Bestimmung des Flughindernisses weiter zu erhöhen, ist bei dem dargestellten Ausführungsbeispiel im Schritt 27 optional vorgesehen, vor dem Bestimmen der Objektparameter und / oder vor dem Übertragen der Objektparameter an die Steuereinrichtung 3 eine Sichtanalyse für eine oder mehrere der Kameraeinrichtungen 1.1, ..., 1.n durchzuführen. Mittels der Sichtanalyse wird geprüft, ob ein jeweils zugeordnetes Erfassungssichtfeld der Kameraeinrichtungen 1.1, ..., 1.n eventuell zumindest teilweise blockiert ist. Ist das Erfassungssichtfeld blockiert, kann die zugeordnete Kameraeinrichtung eventuell ihre Sensoraufgabe nicht mehr zuverlässig erfüllen. Hierbei kann vorgesehen sein, Sichtfeldkenndaten zu erzeugen und an die Steuereinrichtung 3 zu übermitteln, wobei die Sichtfeldkenndaten anzeigen, ob und gegebenenfalls in welchem Umfang das Erfassungssichtfeld einer oder mehrerer der Kameraeinrichtungen 1.1, ..., 1.n blockiert ist. Überschreitet der Umfang einer Blockierung für wenigstens ein Erfassungssichtfeld einen Schwellwert, kann die Steuereinrichtung 3 eine Notlandung des Fluggeräts initiieren.

Es kann vorgesehen sein, in Ergänzung zu der Sichtanalyse oder alternativ hierzu (Schritt 28) eine oder weitere Prüfungen für die Sensoreinrichtung 1 und / oder der Auswerteeinrichtung 2 durchzuführen. Hierzu werden zum Beispiel ein Systemstatus, beispielweise Stromversorgung und / oder Auslastung einer Prozessoreinheit, die aktuelle Laufzeit der künstlichen Intelligenz und / oder eine Zeitsynchronisation der Kameraeinrichtungen 1.1, ..., 1.n fortdauernd überwacht, sei es einzeln oder in Gruppen, beispielweise in regelmäßigen Zeitintervallen.

Ausgehend von den von der Auswerteeinrichtung 2 erhaltenen Objektparametern steuert dann die Steuereinrichtung 3 das Fluggerät, derart, dass eine Kollision mit dem detektierten Flughindernis vermieden wird.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Verfahren zum Steuern einer Flugbewegung eines Fluggeräts, mit
- Erfassen von ersten Bilddaten mittels einer ersten Kameraeinrichtung (1.1), die an dem Fluggerät angeordnet und eingerichtet ist, eine Umgebung des Fluggeräts beim Fliegen zu beobachten, wobei die ersten Bilddaten eine erste Folge von ersten Kamerabildern anzeigen;
- Erfassen von zweiten Bilddaten mittels einer zweiten Kameraeinrichtung (1.2), die an dem Fluggerät angeordnet und eingerichtet ist, die Umgebung des Fluggeräts beim Fliegen zu beobachten wobei die zweiten Bilddaten eine zweite Folge von zweiten Kamerabildern anzeigen;
- Verarbeiten der ersten und der zweiten Bilddaten mittels einer Auswerteeinrichtung (2), aufweisend:
- Vorverarbeiten der ersten und der zweiten Bilddaten, wobei hierbei aus den ersten und den zweiten Bilddaten Messbilddaten bestimmt werden, die wenigstens ein Kameramessbild anzeigen;
- Ausführen einer redundanten Bildanalyse für das wenigstens eine Kameramessbild, wobei das wenigstens eine Kameramessbild hierbei in getrennten Bildanalysen mittels einer ersten Bildanalyse und einer zweiten Bildanalyse analysiert wird;
- Bestimmen von Objektparametern für eine Lage eines Flughindernisses in der Umgebung des Luftfahrzeuges, wenn die erste Bildanalyse das Flughindernis in dem wenigstens einen Kameramessbild bestimmt und die zweite Bildanalyse das Flughindernis in dem wenigstens einen Kameramessbild ebenso bestimmt; und
- Übertragen von Flughindernisdaten, welche zumindest die Objektparameter anzeigen, an eine Steuereinrichtung (3) des Fluggeräts; und
- Steuern einer Flugbewegung des Fluggeräts durch die Steuereinrichtung (3) unter Berücksichtigung der Objektparameter zum Vermeiden einer Kollision mit dem Flughindernis,
wobei die erste Bildanalyse auf künstlicher Intelligenz basiert und die zweite Bildanalyse frei von künstlicher Intelligenz ausgeführt wird.

2. Verfahren nach Anspruch 1, **dadurch gekennzeichnet, dass** beim Bestimmen der Objektparameter für das Flughindernis zumindest ein Objektparameter aus der folgenden Gruppe bestimmt wird: Entfernung des Flughindernisses vom Fluggerät, Richtung des Flughindernisses in Bezug auf das Fluggerät, Größe des Flughindernisses, bewegtes Flughindernis, unbewegtes Flughindernis, Orientierung einer Flugbewegung des Flughindernisses, aktuelle Geschwindigkeit der Flugbewegung des Flughindernisses und ein vorhergesagter Flugpfad des Flughindernisses für einen Vorhersagezeitraum.

3. Verfahren nach Anspruch 1 oder 2, **dadurch gekennzeichnet, dass** das Bestimmen der Objektparameter weiterhin Folgendes umfasst:
- Bereitstellen von Flugbewegungsdaten, die die Flugbewegung des Fluggeräts anzeigen, durch die Steuereinrichtung (3); und
- Bestimmen der Objektparameter für die Lage des Flughindernisses in der Umgebung des Fluggeräts unter Berücksichtigung der Flugbewegungsdaten.

4. Verfahren nach mindestens einem der vorangehenden Ansprüche, **dadurch gekennzeichnet, dass** bei der zweiten Bildanalyse mittels eines optischen Flusses eine Bewegung für das Flughindernis bestimmt wird.

5. Verfahren nach mindestens einem der vorangehenden Ansprüche, **dadurch gekennzeichnet, dass** bei der ersten Bildanalyse mittels eines auf künstlicher Intelligenz basierenden Analysealgorithmus ein oder mehrere der folgenden Kennwerte für das Flughindernis bestimmt werden: Höhe des Flughindernisses, Breite des Flughindernisses und Konfidenzwert für die Bestimmung des Flughindernisses in dem wenigstens einen Kameramessbild.

6. Verfahren nach mindestens einem der vorangehenden Ansprüche, **dadurch gekennzeichnet, dass** beim Bestimmen der Objektparameter aus zeitlich aufeinanderfolgenden Positionen des Flughindernis ein dreidimensionaler Bewegungspfad für das Flughindernis in der Umgebung bestimmt wird.

7. Verfahren nach mindestens einem der vorangehenden Ansprüche, **dadurch gekennzeichnet, dass** weiterhin Folgendes vorgesehen ist: Ausführen einer Sichtanalyse für die erste / zweite Kameraeinrichtung (1.1, 1.2) beim Vorverarbeiten der ersten und der zweiten Bilddaten, wobei hierbei bestimmt wird, ob ein jeweiliges Erfassungssichtfeld der ersten / zweiten Kameraeinrichtung (1.1, 1.2) frei von einer Sichtfeld-Blockierung ist.

8. Verfahren nach Anspruch 7, **dadurch gekennzeichnet, dass** bei der Sichtanalyse bestimmt wird, in welchem Umfang das Erfassungssichtfeld der ersten Kameraeinrichtung (1.1) und / oder der zweiten Kameraeinrichtung (1.2) blockiert ist, und in der Auswerteeinrichtung Sichtfeldkenndaten bereitgestellt und an die Steuereinrichtung (3) übertragen werden, die den Umfang der Blockierung des Erfassungssichtfelds anzeigen.

9. Verfahren nach Anspruch 8, **dadurch gekennzeichnet, dass** die Steuereinrichtung die Sichtfeldkenndaten prüft und die Flugbewegung des Fluggeräts Notlandesteuersignale entsprechend steuert, wenn die Sichtfeldkenndaten einen Umfang der Blockierung des Erfassungssichtfelds für die erste Kameraeinrichtung (1.1) und / oder die zweite Kameraeinrichtung (1.2) anzeigen, welcher einen Schwellwert überschreitet, wobei die Notlandesteuersignale eingerichtet sind, eine Notlandung des Fluggeräts zu bewirken.

10. Fluggerät, mit
- einer Sensoreinrichtung (1), die eine erste und eine zweite Kameraeinrichtung (1.1, 1.2) aufweist;
- einer Auswerteeinrichtung (2), die ein oder mehreren Prozessoren aufweist; und
- einer Steuereinrichtung (3), die eingerichtet ist, eine Flugbewegung des Fluggeräts zu steuern;
wobei das Fluggerät für Folgendes eingerichtet ist:
- Erfassen von ersten Bilddaten mittels der ersten Kameraeinrichtung (1.1), die eingerichtet ist, eine Umgebung des Fluggeräts beim Fliegen zu beobachten, wobei die ersten Bilddaten eine erste Folge von ersten Kamerabildern anzeigen;
- Erfassen von zweiten Bilddaten mittels der zweiten Kameraeinrichtung (1.2), die eingerichtet ist, die Umgebung des Fluggeräts beim Fliegen zu beobachten, wobei die zweiten Bilddaten eine zweite Folge von zweiten Kamerabildern anzeigen;
- Verarbeiten der ersten und der zweiten Bilddaten mittels der Auswerteeinrichtung (2), aufweisend:
- Vorverarbeiten der erste und der zweiten Bilddaten, wobei hierbei aus den ersten und den zweiten Bilddaten Messbilddaten bestimmt werden, die wenigstens ein Kameramessbild anzeigen;
- Ausführen einer redundanten Bildanalyse für das wenigstens eine Kameramessbild, wobei das wenigstens eine Kameramessbild hierbei in getrennten Bildanalysen mittels einer ersten und einer zweiten Bildanalyse, analysiert wird;
- Bestimmen von Objektparametern für eine Lage eines Flughindernisses in der Umgebung des Luftfahrzeuges, wenn die erste Bildanalyse das Flughindernis in dem wenigstens einen Kameramessbild bestimmt und die zweite Bildanalyse das Flughindernis in dem wenigstens einen Kameramessbild ebenso bestimmt; und
- Übertragen von Flughindernisdaten, welche zumindest die Objektparameter anzeigen, an die Steuereinrichtung (3) des Fluggeräts; und
- Steuern der Flugbewegung des Fluggeräts durch die Steuereinrichtung (3) unter Berücksichtigung der Objektparameter zum Vermeiden einer Kollision mit dem Lufthindernis,
wobei die erste Bildanalyse auf künstlicher Intelligenz basiert und die zweite Bildanalyse frei von künstlicher Intelligenz ausgeführt wird.

11. Fluggerät nach Anspruch 10, ausgebildet als unbemanntes Fluggerät.

## Claims

1. A method for controlling a flight movement of an aerial vehicle, comprising
- capturing first image data by means of a first camera device (1.1) which is arranged on the aerial vehicle and configured to monitor an environment of the aerial vehicle while flying, wherein the first image data indicate a first sequence of first camera images;
- capturing second image data by means of a second camera device (1.2) which is arranged on the aerial vehicle and configured to monitor the environment of the aerial vehicle while flying, wherein the second image data indicate a second sequence of second camera images;
- processing the first and the second image data by means of an evaluation device (2), comprising:
- preprocessing the first and the second image data, wherein in this process measurement image data indicative of at least one camera measurement image are determined from the first and the second image data;
- performing a redundant image analysis for the at least one camera measurement image, wherein in doing so the at least one camera measurement image is analyzed in separate image analyses by means of a first image analysis and a second image analysis;
- determining object parameters for a position of a flight obstacle in the environment of the aerial vehicle if the first image analysis determines the flight obstacle in the at least one camera measurement image and the second image analysis likewise determines the flight obstacle in the at least one camera measurement image; and
- transmitting flight obstacle data indicative of at least the object parameters to a control device (3) of the aerial vehicle; and
- controlling a flight movement of the aerial vehicle by the control device (3) taking into account the object parameters in order to avoid a collision with the flight obstacle,
wherein the first image analysis is based on artificial intelligence and the second image analysis is performed free of artificial intelligence.

2. The method according to claim 1, **characterized in that** in determining the object parameters for the flight obstacle, at least one object parameter is determined from the following group: distance of the flight obstacle from the aerial vehicle, direction of the flight obstacle with respect to the aerial vehicle, size of the flight obstacle, moving flight obstacle, unmoving flight obstacle, orientation of a flight movement of the flight obstacle, current speed of the flight movement of the flight obstacle, and a predicted flight path of the flight obstacle for a prediction period.

3. The method according to claim 1 or 2, **characterized in that** the determination of the object parameters further comprises:
- providing, by the control device (3), flight movement data indicative of the flight movement of the aerial vehicle; and
- determining the object parameters for the position of the flight obstacle in the environment of the aerial vehicle taking into account the flight movement data.

4. The method according to at least one of the preceding claims, **characterized in that**, in the second image analysis, a movement for the flight obstacle is determined by means of an optical flow.

5. The method according to at least one of the preceding claims, **characterized in that**, in the first image analysis, one or more of the following characteristic values for the flight obstacle are determined by means of an analysis algorithm based on artificial intelligence: height of the flight obstacle, width of the flight obstacle and confidence value for the determination of the flight obstacle in the at least one camera measurement image.

6. The method according to at least one of the preceding claims, **characterized in that**, in the determination of the object parameters, a three-dimensional movement path for the flight obstacle in the environment is determined from temporally successive positions of the flight obstacle.

7. The method according to at least one of the preceding claims, **characterized in that** the following is further provided: performing a visual analysis for the first/second camera device (1.1, 1.2) in the preprocessing of the first and the second image data, wherein it is in the process determined whether a respective detection field of view of the first/second camera device (1.1, 1.2) is free of a field of view blockage.

8. The method according to claim 7, **characterized in that**, in the visual analysis, it is determined to what extent the detection field of view of the first camera device (1.1) and/or of the second camera device (1.2) is blocked, and field of view characteristic data indicative of the extent of the blockage of the detection field of view are provided in the evaluation device and transmitted to the control device (3).

9. The method according to claim 8, **characterized in that** the control device checks the field of view characteristic data and controls the flight movement of the aerial vehicle in accordance with emergency landing control signals if the field of view characteristic data indicate an extent of the blockage of the detection field of view for the first camera device (1.1) and/or the second camera device (1.2) which exceeds a threshold value, wherein the emergency landing control signals are configured to effect an emergency landing of the aerial vehicle.

10. An aerial vehicle, comprising
- a sensor device (1) which comprises a first and a second camera device (1.1, 1.2);
- an evaluation device (2) which comprises one or more processors; and
- a control device (3) which is configured to control a flight movement of the aerial vehicle;
wherein the aerial vehicle is configured for the following:
- capturing first image data by means of the first camera device (1.1) which is configured to monitor an environment of the aerial vehicle while flying, wherein the first image data indicate a first sequence of first camera images;
- capturing second image data by means of the second camera device (1.2) which is configured to monitor the environment of the aerial vehicle while flying, wherein the second image data indicate a second sequence of second camera images;
- processing the first and the second image data by means of the evaluation device (2), comprising:
- preprocessing the first and the second image data, wherein in doing so measurement image data indicative of at least one camera measurement image are determined from the first and the second image data;
- performing a redundant image analysis for the at least one camera measurement image, wherein in doing so the at least one camera measurement image is analyzed in separate image analyses by means of a first and a second image analysis;
- determining object parameters for a position of a flight obstacle in the environment of the aerial vehicle if the first image analysis determines the flight obstacle in the at least one camera measurement image and the second image analysis likewise determines the flight obstacle in the at least one camera measurement image; and
- transmitting flight obstacle data indicative of at least the object parameters to the control device (3) of the aerial vehicle; and
- controlling the flight movement of the aerial vehicle by the control device (3) taking into account the object parameters in order to avoid a collision with the flight obstacle,
wherein the first image analysis is based on artificial intelligence and the second image analysis is performed free of artificial intelligence.

11. The aerial vehicle according to claim 10, configured as an unmanned aerial vehicle.

## Revendications

1. Procédé de commande d'un mouvement de vol d'un aéronef, comportant
- la capture des premières données d'image au moyen d'un premier dispositif de caméra (1.1), qui est disposé sur l'aéronef et configuré pour observer un environnement de l'aéronef pendant le vol, dans lequel les premières données d'image indiquent une première séquence de premières images de caméra ;
- la capture des deuxièmes données d'image au moyen d'un deuxième dispositif de caméra (1.2) qui est disposé sur l'aéronef et qui est configuré pour observer l'environnement de l'aéronef pendant le vol, dans lequel les deuxièmes données d'image indiquent une deuxième séquence de deuxièmes images de caméra ;
- le traitement des premières et deuxièmes données d'image au moyen d'un dispositif d'évaluation (2), comprenant :
- le prétraitement des premières et deuxièmes données d'image, dans lequel on détermine à partir des premières et deuxièmes données d'image des données d'image de mesure qui indiquent au moins une image de mesure de caméra ;
- l'exécution d'une analyse d'image redondante pour la au moins une image de mesure de caméra, dans lequel la au moins une image de mesure de caméra est analysée dans des analyses d'image séparées au moyen d'une première analyse d'image et d'une deuxième analyse d'image ;
- la détermination de paramètres d'objet pour une position d'un obstacle de vol dans l'environnement de l'aéronef si la première analyse d'image détermine l'obstacle de vol dans la au moins une image de mesure de caméra et la deuxième analyse d'image détermine également l'obstacle de vol dans la au moins une image de mesure de caméra ; et
- la transmission des données d'obstacles de vol, qui contiennent au moins les paramètres de l'objet à un dispositif de commande (3) de l'aéronef ; et
- la commande d'un mouvement de vol de l'aéronef par le dispositif de commande (3) en prenant en compte des paramètres de l'objet pour éviter une collision avec l'obstacle de vol,
dans lequel la première analyse d'image est basée sur l'intelligence artificielle et la deuxième analyse d'image est réalisée sans intelligence artificielle.

2. Procédé selon la revendication 1, **caractérisé en ce que** lors de la détermination des paramètres d'objet pour l'obstacle de vol au moins un paramètre d'objet du groupe suivant est déterminé : distance de l'obstacle de vol par rapport à l'aéronef, direction de l'obstacle de vol par rapport à l'aéronef, la taille de l'obstacle de vol, obstacle de vol en mouvement, obstacle de vol stationnaire, orientation du mouvement de vol de l'obstacle de vol, vitesse actuelle du mouvement de vol de l'obstacle de vol et trajectoire de vol prévue de l'obstacle de vol pour une période de prévision.

3. Procédé selon la revendication 1 ou 2, **caractérisé en ce que** la détermination des paramètres de l'objet comprend en outre :
- la fourniture des données de mouvement de vol indiquant le mouvement de vol de l'aéronef par le dispositif de commande (3) ; et
- la détermination des paramètres de l'objet pour la localisation de l'obstacle de vol à proximité de l'aéronef en tenant compte des données de mouvement de vol.

4. Procédé selon au moins une des revendications précédentes, **caractérisé en ce que** dans la deuxième analyse d'image au moyen d'un flux optique, un mouvement pour l'obstacle de vol est déterminé.

5. Procédé selon au moins une des revendications précédentes, **caractérisé en ce que** dans la première analyse d'image au moyen d'un algorithme d'analyse basé sur l'intelligence artificielle, une ou plusieurs des valeurs caractéristiques suivantes pour l'obstacle de vol sont déterminés : hauteur de l'obstacle de vol, largeur de l'obstacle de vol et valeur de confiance pour la détermination de l'obstacle de vol dans au moins une image de mesure de caméra.

6. Procédé selon au moins une des revendications précédentes, **caractérisé en ce que** lors de la détermination des paramètres d'objet à partir de positions temporellement successives de l'obstacle de vol, une trajectoire de mouvement tridimensionnelle pour l'obstacle de vol dans l'environnement est déterminée.

7. Procédé selon au moins une des revendications précédentes, **caractérisé en ce que** il est prévu en outre ce qui suit : effectuer une analyse de vision pour le premier/deuxième dispositif de caméra (1.1, 1.2) lors du prétraitement des première et deuxième données d'image, dans lequel on détermine si un champ de vision de détection respectif du premier/deuxième dispositif de caméra (1.1, 1.2) est exempt d'un blocage de champ de vision.

8. Procédé selon la revendication 7, **caractérisé en ce que** l'analyse visuelle détermine dans quelle mesure le champ de vision de détection du premier dispositif de caméra (1.1) et/ou du deuxième dispositif de caméra (1.2) est bloqué et des caractéristiques du champ visuel sont fournies dans le dispositif d'évaluation et transférées au dispositif de commande (3), qui indiquent l'étendue du blocage des données de champ de vision.

9. Procédé selon la revendication 8, **caractérisé en ce que** le dispositif de commande vérifie les caractéristiques du champ de vision et le mouvement de vol commande des signaux de commande d'atterrissage d'urgence de l'aéronef en conséquence si les caractéristiques du champ de vision indiquent une étendue de blocage du champ de vision de détection pour le premier dispositif de caméra (1.1) et/ou le deuxième dispositif de caméra (1.2) qui dépasse une valeur seuil, dans lequel les signaux de commande d'atterrissage d'urgence sont conçus pour provoquer un atterrissage d'urgence de l'aéronef.

10. Aéronef, comportant
- un dispositif de capteur (1) comportant un premier et un deuxième dispositif de caméra (1.1, 1.2) ;
- un dispositif d'évaluation (2) comportant un ou plusieurs processeurs ; et
- un dispositif de commande (3) qui est configuré pour commander un mouvement de vol de l'aéronef ;
dans lequel l'aéronef est conçu pour :
- capturer des premières données d'image au moyen du premier dispositif de caméra (1.1), qui est configuré pour observer un environnement de l'aéronef pendant le vol, dans lequel les premières données d'image indiquent une première séquence de premières images de caméra ;
- capturer des deuxièmes données d'image au moyen du deuxième dispositif de caméra (1.2), qui est destiné à observer l'environnement de l'aéronef pendant le vol, dans lequel les deuxièmes données d'image indiquent une deuxième séquence de deuxièmes images de caméra ;
- traiter des premières et deuxièmes données d'image au moyen du dispositif d'évaluation (2), comprenant de :
- prétraiter des première et deuxième données d'image, dans lequel à partir des premières et deuxièmes données d'image, on détermine des données d'image de mesure, qui indiquent au moins une image de mesure de caméra ;
- effectuer une analyse d'image redondante pour la au moins une image de mesure de caméra, dans lequel la au moins une image de mesure de caméra est analysée dans des analyses d'image séparées au moyen d'une première et d'une deuxième analyse d'image ;
- la détermination des paramètres d'objet pour une position d'un obstacle de vol à proximité de l'aéronef, si la première analyse d'image détermine l'obstacle de vol dans la au moins une image de mesure de caméra et la deuxième analyse d'image détermine également l'obstacle de vol dans au moins une image de mesure de caméra ; et
- la transmission des données d'obstacles de vol, qui indiquent au moins les paramètres de l'objet, au dispositif de commande (3) de l'aéronef ; et
- la commande du mouvement de vol de l'aéronef par le dispositif de commande (3) en prenant en compte des paramètres de l'objet pour éviter une collision avec l'obstacle de vol,
dans lequel la première analyse d'image est basée sur l'intelligence artificielle et la deuxième analyse d'image est réalisée sans intelligence artificielle.

11. Aéronef selon la revendication 10, conçu comme un aéronef sans pilote.
